Europäisches Patentamt

European Patent Office

Office européen des brevets

(19)

(11) Veröffentlichungsnummer : **0 394 607 B1**

## (12) EUROPÄISCHE PATENTSCHRIFT

(45) Veröffentlichungstag der Patentschrift :
**22.04.92 Patentblatt 92/17**

(51) Int. Cl.$^5$ : **C02F 1/04,** C02F 9/00,
C02F 1/44

(21) Anmeldenummer : **90100543.9**

(22) Anmeldetag : **11.01.90**

(54) **Verfahren und Vorrichtung zur Behandlung von Salzlaken und verunreinigten Mineralsalzen und -salzgemischen.**

(30) Priorität : **24.04.89 DE 3913482**

(43) Veröffentlichungstag der Anmeldung :
**31.10.90 Patentblatt 90/44**

(45) Bekanntmachung des Hinweises auf die
Patenterteilung :
**22.04.92 Patentblatt 92/17**

(84) Benannte Vertragsstaaten :
**AT CH DE GB IT LI**

(56) Entgegenhaltungen :
**EP-A- 0 278 745**
**DE-A- 3 723 375**
**US-A- 4 332 584**

(73) Patentinhaber : **SEKA Gesellschaft für
Schutzraumtechnik mbH
Reetzstrasse 46 c
W-7507 Pfinztal-Söllingen (DE)**

(72) Erfinder : **Zampieri, Charles
Lenbachstrasse 25
W-7000 Stuttgart 1 (DE)**

(74) Vertreter : **Koepe, Gerd L., Dipl.-Chem.
Stuntzstrasse 16
W-8000 München 80 (DE)**

## Beschreibung

Die Erfindung betrifft ein Verfahren sowie eine Vorrichtung zur Behandlung von Salzlaken und verunreinigten Mineralsalzen oder -salzgemischen. Insbesondere betrifft die Erfindung ein Verfahren sowie eine Vorrichtung, mit der übersättigte Salzlaken oder verunreinigte Mineralsalze oder -salzgemische von solchen Verunreinigungen befreit werden können, die im Bereich der Vorbereitung und Konservierung von tierischen Häuten mit Mineralsalzen, insbesondere mit Kochsalz, vor der Lederherstellung anfallen. Zu solchen Verunreinigungen gehören beispielsweise tierischer Dung und Urin, Blut-, Haut- und Fleischreste sowie Haare.

Die vom Tierkörper abgezogene, sog. "grüne" Tierhaut wird nur selten sofort nach der Schlachtung gegerbt und in der Lederfabrik zu Leder verarbeitet. Das Sammeln größerer Haut-Posten, das Sortieren nach Gewichts- und Qualitätsklassen, die Zusammenstellung der Lose und der Transport vom Schlachthof bzw. Ort der Vorbereitung und Konservierung zur Lederfabrik benötigen einen längeren Zeitraum, oft Wochen oder Monate. Unkonservierte und ungegerbte Haut wird jedoch aufgrund ihres Aufbaus aus Eiweiß im natürlichen, nassen Zustand von Fäulnisbakterien oder Schimmel befallen, die in den feuchten, oft warmer Witterung ausgesetzten Rohhäuten optimale Bedingungen für die Fortpflanzung finden. Um einen Befall und eine Vermehrung fäulnisbildender Bakterien auf den Rohhäuten zu unterbinden, müssen diese konserviert werden.

Obwohl aus ökologischen Gründen andere Verfahren der Konservierung vorgeschlagen wurden, hat sich einzig die Konservierung mit Kochsalz durchsetzen können. Darüberhinaus erfüllt bisher allein die Konservierung mit Kochsalz die zwei wesentlichsten, an eine derartige Konservierung zu stellenden Erfordernisse: Zum einen muß die Konservierung auf der Rohhaut zu einer über längere Zeit anhaltenden bakteriziden Wirkung und damit Verhinderung der Fäulnisbildung und des Schimmelbefalls führen. Zum anderen muß die Haut auch nach Konservierung und längerer Lagerung noch zu einwandfreiem Leder verarbeitet werden und dazu die Konservierung wieder voll rückgängig gemacht werden können. Beide Erfordernisse erfüllt die Kochsalz- Konservierung optimal.

Im einzelnen erfolgt die Konservierung von Rohhäuten mit Kochsalz in der Weise, daß die grob vorgereinigten Häute entweder mit festem, übliche Vergällungsmittel wie Naphthalin oder ähnliche organische Verbindungen enthalten- dem Kochsalz bestreut oder bis zu 24 Stunden lang in eine gesättigte oder übersättigte Salzlake eingelegt werden. Beim Stapeln und Zusammenlegen der Häute zu Paketen fällt entweder festes Salz von den eingesalzenen Hautpartien ab oder tropft gesättigte oder übersättigte Salzlake von den Häuten herunter. Die dabei anfallenden festen oder gelösten Salzmengen werden bisher üblicherweise unmittelbar in die Kanalisation bzw. in die Umgebung abgeleitet, was zu einer untragbaren Belastung der Gewässer mit Kochsalz in hohen Konzentationen führt.

Darüberhinaus wird vor der Gerbung bzw. Weiterverarbeitung der Häute zu Leder das Konservierungssalz durch "Weichen" der Häute in Wasser gelöst. Die bei diesem Schritt anfallenden, Salz in hohen Konzentrationen enthaltenden Wassermengen werden ebenfalls in die Kanalisation bzw. unmittelbar in die Flüsse geleitet. Auch dies führt zu einer untragbaren Erhöhung der Salzkonzentration in natürlichen Gewässern.

Ein weiterer Nachteil der herkömmlichen Entsorgung der bei der Konservierung von Rohhäuten anfallenden Salzmengen liegt darin, daß das zunehmend teurer werdende Kochsalz einer erneuten Verwendung nicht mehr zugeführt werden kann. Damit schlagen die Kosten für den Einkauf von Steinsalz zu 100 % auf den Preis der konservierten Häute durch.

In der DE-A 3 723 375 wird ein Verfahren zur Aufbereitung wäßriger Lösungen aus der Fell- und Hautkonservierung offenbart, in dem die zu behandelnde Lösung durch Säurezugabe auf einen pH-Wert von 2 bis 2,5 gebracht und nachfolgend Eiweiß- und Blutstoffe ausgefällt werden und abfiltriert werden. Danach wird die klare saure wäßrige Lösung eingedampft und die abgeschiedenen Kristalle entwässert. Die beim Eindampfen entstehenden Dämpfe werden kondensiert und nachfolgend durch Einblasen von Luft von organischen Komponenten befreit. Eine Behandlung der bei der Fell- bzw. Hautkonservierung anfallenden festen, insbesondere festen salzartigen Abfallstoffe ermöglicht das vorgeschlagene Verfahren nicht.

Ein Verfahren bzw. eine Vorrichtung zur Behandlung von verunreinigten Mineralsalzen bzw. Salzgemischen ist in der parallelen, am 17. Oktober 1988 eingereichten deutschen Patentanmeldung P 3835418. 7 beschrieben. In dieser Patentanmeldung wird die Behandlung von verunreinigten Mineralsalzen oder Salzgemischen in einer beheizbaren Retorte unter kontinuierlichem oder schrittweisem Aufheizen auf über 350 °C für einen Zeitraum von mindestens 4 Minuten beschrieben. Bei diesem Aufheizvorgang sich entwickelnde Gase und Dämpfe werden in die Atmosphäre abgeführt. Diese Retorte ist vorzugsweise als stehendes Zylinderrohr ausgebildet, wobei sich die Retorte über ihre gesamte Länge mit einer Heizwendel auf die erforderliche Verfahrenstemperatur aufheizen läßt. Gravierender Nachteil dieses Verfahrens bzw. der in dieser Anmeldung beschriebenen Vorrichtung ist das Erfordernis, daß nur vorgereinigte, im wesentlichen von festen Verunreinigungen freie Mineralsalze eingesetzt werden können. Verfahrensbedingt enthaltene organische Bestandteile werden nicht abgetrennt. Die Vorrichtung birgt darüberhinaus die Gefahr, daß sich eine zunehmend dicker wer-

EP 0 394 607 B1

dende Salzschicht an den beheizten Innenwänden der Retorte niederschlägt, den Wärmeübergang erschwert und mit zunehmender Schichtdicke den Durchtritt von Gasen und Salz im Innern der Retorte erschwert und letztlich unmöglich macht. Andere aus dem Stand der Technik gekannte Verfahren werden bei so niedrigen Behandlungstemperaturen durchgeführt, daß die Produkt-Salze infolge der relativ niedrigen Temperaturen nicht frei von Keimen erhältlich sind.

Diese Nachteile früherer Anlagen bzw. mit ihnen durchgeführter Verfahren zu beseitigen, hat sich die vorliegende Erfindung zur Aufgabe gemacht. Mit der neuen Vorrichtung gemäß der Erfindung sollte eine Anlage bereitgestellt werden, in der ein Zubacken und nachfolgend ein zurückgehender Wirkungsgrad einer Anlage zur Aufbereitung und reinigenden Behandlung von Salzlaken und Mineralsalzen bei längerer kontinuierlicher oder diskontinuierlicher Laufdauer vermieden werden kann.

Nicht nur aus Gründen einer Verminderung der Umweltbelastung, sondern auch aus Kostengründen war es darüberhinaus erwünscht, ein Verfahren und eine Vorrichtung bereitzustellen, mit denen nicht nur eine Entsalzung des bei der Aufbereitung von Rohhäuten anfallenden Prozeßwassers erreicht werden kann, sondern auch Salzlaken sowie die genannten Verunreinigungen enthaltende Mineralsalze oder -salzgemische so aufbereitet werden können, daß sie in Verunreinigungs-freier Form anfallen und für den erneuten Vorgang der Konservierung verwendet werden können.

Ein weiteres Ziel der vorliegenden Erfindung bestand darin, die Salze bei dieser Gelegenheit als rieselfähige Granulate mit einer Korngröße zur Verfügung zu stellen, die den jeweiligen Erfordernissen der Verwender angepaßt werden kann.

Eine weitere Aufgabe der Erfindung war es, die verunreinigten Mineralsalze in einer Weise aufzubereiten, daß die entstehenden Salzprodukte keimfrei sind.

Letztlich war es auch eine Aufgabe der Erfindung, ein zur Aufbereitung von Salzlaken und verunreinigten Mineralsalzen oder -salzgemischen geeignetes Verfahren bereitzustellen, das energiesparend und in einfachen Anordnungen kontinuierlich oder diskontinuierlich durchgeführt werden kann. Als Produkte eines solchen Verfahrens sollten nicht nur Salze in Qualitäten anfallen, die den Anforderungen der Verwender entsprechen, sondern auch Wasser möglichst hoher Reinheit gewonnen werden, das wieder in den Prozeßwasser- oder Trinkwasser-Kreislauf eingeschleust werden kann. Durch ein solches Verfahren sollte die Möglichkeit eröffnet werden, alle Produkte des Verfahrens in hoher Qualität zu gewinnen und damit einer erneuten, wirtschaftlich sinnvollen Verwertung zuführen zu können.

Es wurde nun gefunden, daß die genannten Aufgaben durch das in Patentanspruch 1 angegebene Verfahren sowie durch die Bereitstellung der in Patentanspruch 13 angegebenen Vorrichtung gelöst werden können. Vorteilhafte Ausführungsformen und Weiterbildungen der Erfindung ergeben sich aus den abhängigen Ansprüchen.

Die Erfindung betrifft ein Verfahren zur Behandlung von Salzlaken und verunreinigten Mineralsalzen oder -salzgemischen, bei dem man

(a) organische Bestandteile weitgehend aus der Prozeßmischung abtrennt,
(b) die resultierende Mischung einer Vakuumverdampfung unterwirft,
(c) die partiell getrockneten Mineralsalze oder -salzgemische bei erhöhter Temperatur thermisch behandelt und danach reine, trockene Mineralsalze oder -salzgemische gewinnt,
(d) den Dampf des Vakuumverdampfungsschrittes kondensiert und einer Umkehrosmose unterwirft und
(e) als Permeat der Umkehrosmose reines Wasser gewinnt.

Die Erfindung betrifft außerdem eine Vorrichtung zur Behandlung von Salzlaken oder verunreinigten Mineralsalzen oder -salzgemischen, die gekennzeichnet ist durch

(a) eine Anlage 1 zur Abtrennung organischer Bestandteile aus der Prozeßmischung,
(b) eine Vakuumverdampfungsanlage 4 zur partiellen Trocknung der Mineralsalze oder -salzgemische,
(c) eine Anlage 5 zur thermischen Behandlung der partiell getrockneten Mineralssalze oder -salzgemische aus der Vakuumverdampfungsanlage 4,
(d) einen Kondensator 7 zur Kondensation der Feuchtigkeitsdämpfe aus der Vakuumverdampfungsanlage 4 und
(e) eine Anlage 9 zur Umkehrosmose des Kondensats aus Schritt (d), sowie
(f) Transportmittel 12, 71, 93 zum Verbinden der Anlage 1 zur Abtrennung organischer Bestandteile, der Vakuumverdampfungsanlage 4, des Kondensators 7 und der Anlage 9 zur Umkehrosmose in Folge sowie Transportmittel 41 zum Verbinden der Vakuumverdampfungsanlage 4 mit der Anlage 5 zur thermischen Behandlung der Salze.

Salzlaken, die in dem erfindungsgemäßen Verfahren behandelt werden, sind Mineralsalze und in erster Linie Kochsalz enthaltende wäßrige Lösungen, die der konservierenden Behandlung von Rohhäuten oder der Weichung der konservierten Häute vor der Gerbung entstammen. Der Salzgehalt dieser wäßrigen Lösungen kann unter dem Sättigungspunkt der Lösung unter den Anwendungsbedingungen liegen. Es ist jedoch auch

3

möglich, übersättigte wäßrige Salzlaken gemäß dem Verfahren der vorliegenden Erfindung zu behandeln. Unter Mineralsalzen werden für die Zwecke der vorliegenden Erfindung alle Verbindungen von Metallkationen mit Säureresten von Mineralsäuren verstanden. Gemische solcher Mineralsalze werden von der vorliegenden Erfindung ebenfalls umfaßt. Vorzugsweise werden unter dem Begriff "Mineralsalze" solche Salze verstanden, wie sie in der konservierenden Behandlung von Rohhäuten eingesetzt werden. Darunter fällt insbesondere Kochsalz; die Erfindung ist jedoch nicht auf die Behandlung von Kochsalz oder Kochsalz enthaltenden Salzmischungen oder Salzlaken beschränkt, auch wenn sie anhand dieser besonders bevorzugten Ausführungsform erläutert wird.

Im ersten Schritt des erfindungsgemäßen Verfahrens zur Behandlung von Salzlaken, verunreinigten Mineralsalzen und -salzgemischen werden organische Bestandteile weitgehend aus der Prozeßmischung abgetrennt. Derartige organische Bestandteile sind meist dem Schlachtvorgang entstammende tierische Abfallstoffe wie tierischer Dung und Urin, Blut, Reste von Fleisch und Haut sowie Haare. Diesem ersten Verfahrensschritt liegt die Erkenntnis zugrunde, daß die genannten Abfallstoffe teilweise verwertbare Komponenten enthalten, die einer gezielten Wiederverwendung zugeführt werden, beispielsweise als Futtermittel eingesetzt werden können. Am einfachsten und wirtschaftlichsten erfolgt eine Abtrennung von den Salzlaken oder Mineralsalzen bzw. -salzgemischen in mehrphasigen Systemen wie Flotations -, Filtrations -, Dekantierungs - und Zentrifugationssystemen. Bevorzugt werden dazu Flotationsverfahren eingesetzt. Dabei werden die mit den genannten organischen Bestandteilen verunreinigten Salzlaken oder Mineralsalze bzw. -salzgemische in an sich aus dem Stand der Technik bekannten Verfahrensweisen mit geeigneten Flotationshilfsmitteln einem wäßrigen Flotationssystem zugeführt. Flotationshilfsmittel können vorzugsweise $FeCl_3$ oder Kieselgur sein. Die Temperaturen liegen üblicherweise bei 5 bis 25 °C, bevorzugt bei Raumtemperatur. Die organischen Bestandteile schwimmen unter der Wirkung der Flotationshilfsmittel auf und können dann auf üblichem Wege als Schlamm von der Flotte abgeschöpft werden. Es verbleiben weitgehend von organischen Bestandteilen befreite, gegebenenfalls übersättigte Salzlösungen, in denen die nicht gelösten Salzanteile als nicht flotierbarer Bodenkörper enthalten sind. Statt einer Flotationsanlage können gemäß weiteren bevorzugten Ausführungsformen der Erfindung auch Filter, Dekanter oder Zentrifugen eingesetzt werden.

In einer bevorzugten Ausführungsform des Verfahrens werden die flotierte organische Bestandteile enthaltenden Schlämme nachfolgend für eine Wiederverwendung, beispielsweise eine Verfütterung, wiederaufbereitet. Dazu können sie zur Entfernung der Flotationshilfsmittel - sofern erforderlich - gewaschen werden. Danach werden sie auf an sich bekannte Weise getrocknet und pulverisiert, um sie dann beispielsweise als Futterzusatz verwenden zu können.

Die nach der Abtrennung der organischen Bestandteile zurückbleibende wäßrige Mischung, die gegebenenfalls nicht gelöste Mineralsalze als Bodenkörper enthält, wird im nächsten Schritt des erfindungsgemäßen Verfahrens einer Vakuumverdampfung unterworfen. Dazu führt man die Mischung bevorzugt einem geschlossenen Gefäß, beispielsweise einem Autoklaven o. ä. zu, worin sie mit üblichen Hilfsmitteln bewegt, beispielsweise gerührt werden kann.

In einer bevorzugten Ausführungsform der vorliegenden Erfindung wird die Vakuumverdampfung der wäßrigen Lösung bzw. Mischung in einem dem Druck dieses Verfahrensschrittes standhaltenden, sofern erwünscht (und dann bevorzugt) thermostatisierbaren Druckgefäß durchgeführt, das die Form eines Zylinders mit einem unten angesetzten seitlich ablaufenden Konus oder auch die Form eines sich nach unten verjüngenden Kegels hat. Die wäßrige Lösung oder Mischung wird über geeignete Zufuhrwege, bevorzugterweise Düsen, in den Innenraum des Gefäßes geführt, wo sie erhöhter Temperatur und vermindertem Druck ausgesetzt wird. Die Temperatur wird durch außerhalb des Gefäßes operierende Heizquellen, bevorzugt eine im Thermostatmantel strömende Heizflüssigkeit oder ein Heizgas, auf die Außenwand des Druckgefäßes aufgebracht. Das Vakuum wird durch übliche Vakuumpumpen erzeugt, die mit dem Druckgefäß über ein am oberen Ende des Gefäßes abgehendes Rohr verbunden sind.

Bei der Vakuumverdampfung abgetrenntes Salz rieselt im Gefäß nach unten und wird - gegebenenfalls über eine Schleuse - diskontinuierlich oder kontinuierlich abgezogen und den folgenden Verfahrensschritten zugeführt. Der besondere Vorteil einer Schleuse für den Salzabzug ist darin zu sehen, daß ein kontinuierlicher Betrieb der Vakuumverdampfungsanlage unter gleichbleibendem Vakuum möglich ist und trotzdem ein permanenter Salzabzug erfolgen kann. Erfindungsgemäß ist es bevorzugt, relativ große Salzkristalle, z. B. mit einer Korngröße von 0,2 bis 0,3 mm, zu erhalten, damit die Salzkristalle durch dem Dampfstrom nicht mitgerissen werden und bei den nachfolgenden Schritten der Behandlung der flüssigen Phase zu Problemen führen. Dies läßt sich erfindungsgemäß in einer besonders bevorzugten Ausführungsform des Verfahrens dadurch erreichen, daß man dem Druckgefäß die wäßrige Lösung oder Mischung über eine Leitung zuführt, die innerhalb des Gefäßes in einer Ringdüse endet, die eine beliebige Anzahl, z. B. bevorzugt 6 bis 8, Einzeldüsen, zum Versprühen der Lösung bzw. Mischung innerhalb des Gefäßes aufweist. Dadurch wird eine gleichmäßige Verteilung der wäßrigen Phase im Innern und ein kontinuierlicher Verdampfungsvorgang gefördert, der nicht nur zu einem kontinuierlichen Dampfstrom bei gleichbleibenden Vakuumverhältnissen, sondern auch zu einer Bildung regelmäßiger Salzkristalle führt. In gewissen Grenzen läßt sich die Kristallgröße sogar durch die Einspritzgeschwindigkeit bzw. den Einspritzdruck, die Größe der Düsen, die Temperatur im Innenraum usw. steuern.

Der bei der Verdampfung entstehende Dampf wird durch das am oberen Ende des Druckgefäßes abgehende Rohr abgezogen, das die Verbindung mit der Vakuumpumpe bzw. den Vakuumpumpen herstellt. Dieses Rohr wird durch ein mit einem Kühlaggregat verbundenes Kühlsystem, bevorzugt einem Intensivkühlsystem, das helixartig im Innern des Rohrs verläuft, gekühlt. Die Temperaturen des Kühlsystems liegen zwischen 8 und 12 °C an der Eintrittsstelle (am in Fließrichtung des Dampfes unteren Ende des Rohrs) und 14 bis 32 °C an der Austrittsstelle (am in Fließrichtung des Dampfes oberen Ende des Rohrs). Die Kühlung ist also bevorzugt eine Gegenstromkühlung. Durch das Intensivkühlsystem, das zudem in platzsparender Weise innerhalb des Dampfabzugrohrs untergebracht ist, wird eine vollständige Kondensation des Dampfes erreicht.

In einer weiteren erfindungsgemäß bevorzugten Ausführungsform sind in dem Dampfabzugsrohr nach Austritt aus dem Druckgefäß und eine gewisse Wegstrecke danach, vorzugsweise nach einer Rohrkrümmung, eine oder mehrere Dampfsperren angebracht, die beispielsweise in einfachen, in den Dampflauf hineinragenden "Schikanen" bestehen können. In besonders bevorzugter Weise ist die erste Sperre unmittelbar nach Austritt des Dampfabzugsrohrs aus dem Druckgefäß installiert. Möglicherweise vom Dampf mitgerissene Salzkristalle werden hier abgeschieden, fallen in das Druckgefäß zurück und verunreinigen das Kondensat später nicht durch größere Mengen mitgerissenen Salzes. Darüberhinaus bilden derartige Dampfsperren ein Hindernis gegen einen stärkeren Druckabfall; der Verfahrensdruck läßt sich dadurch gleichmäßiger halten.

Am unteren Ende des Dampfabzugsrohrs wird das Kondensat in ein Reservoir abgelassen und diskontinuierlich oder kontinuierlich entfernt.

Die Vakuumverdampfung wird in einer bevorzugten Ausführungsform des erfindungsgemäßen Verfahrens bei einem Druck im Bereich von 0,5 bis $10^{-3}$ bar, noch mehr bevorzugt im Bereich von $10^{-1}$ bis $10^{-2}$ bar, durchgeführt. Die Verfahrenstemperaturen bewegen sich dabei vorteilhafterweise im Bereich von 20 bis 50 °C, noch mehr bevorzugt bei 42 bis 50 °C. Der Vorteil der Aufkonzentrierung der wäßrigen Mischung im Wege der Vakuumverdampfung gegenüber bisher bekannten Verfahren, beispielsweise der Behandlung in einer beheizten Retorte, ist darin zu sehen, daß erfindungsgemäß in energiesparender Weise ein kaum noch Salze enthaltender Wasserdampf einerseits und Mineralsalz bzw. -salzmischungen mit einem deutlich verringerten Feuchtigkeitsgehalt andererseits, bevorzugt mit einem Feuchtigkeitsgehalt von maximal 40 %, besonders bevorzugt mit einem Feuchtigkeitsgehalt von nur noch 25 bis 35 %, gewonnen werden. Die Gefahr des Zusetzens der Anlage oder einzelner Anlagenteile sowie einer Verschlechterung der Energieausnutzung durch den Wärmeübergang behindernde Salzschichten besteht nicht.

In einer weiter bevorzugten Ausführungsform des Verfahrens werden die dem Schritt der Vakuumverdampfung zugeführten wäßrigen Mischungen durch an anderer Stelle des Verfahrens anfallende Abwärme vorgewärmt. Beispielsweise kann die bei der nachfolgend beschriebenen thermischen Behandlung der Salze anfallende Warmluft dazu verwendet werden, die wäßrigen Mischungen auf eine Temperatur von 20 bis 50 °C, bevorzugt von 42 bis 50 °C, aufzuwärmen und eine solche Temperatur im Verlauf der Vakuumverdampfung auch beizubehalten, d. h. die erforderliche Verdampfungswärme bereitzustellen. Die Energieeinsparung erhöht die Wirtschaftlichkeit des Verfahrens.

Die als Produkte der Vakuumverdampfung gewonnenen, partiell getrockneten Mineralsalze bzw. -salzgemische bestehen im besonders bevorzugten Fall - neben Wasser - nahezu ausschließlich aus Kochsalz. Diesem können jedoch auch andere Salze sowie geringere Mengen an natürlichen oder prozeßbedingten Verunreinigungen, wie beispielsweise Chloride anderer Metalle, Bromide, Iodide, Carbonate, Hydrogencarbonate, Phosphate oder Sulfate oder andere Salze, zugemischt sein. Die Mineralsalze bzw. -salzgemische werden im nächsten Schritt des Verfahrens gemäß der Erfindung einer thermischen Behandlung bei erhöhter Temperatur unterzogen. Bevorzugt werden der thermischen Behandlung Mineralsalze oder -salzmischungen mit einem Feuchtigkeitsgehalt von höchstens 40 %, besonders bevorzugt mit einem Feuchtigkeitsgehalt von 25 bis 35 %, zugeführt. Dies kann durch übliche Mittel, beispielsweise einen Bandförderer oder eine Förderschnecke, geschehen. In einer bevorzugten Ausführungsform des erfindungsgemäßen Verfahrens wird das thermisch zu behandelnde Mineralsalz oder -salzgemisch dem Drehrohrofen über eine Stopf-Fördervorrichtung zugeführt. Diese kann beispielsweise aus einem mit seitlichem Zulaufstutzen oder Zulaufbehälter versehenen Zylinder bestehen, in dem ein Stopfer über eine Strecke manuell oder maschinell bewegt werden kann, die sich (in Fließrichtung des zugeführten Salzes) von einem Punkt vor dem seitlichen Zulaufstutzen bis zu einem Punkt hinter dem seitlichen Zulaufstutzen erstreckt. Durch Bewegen des Stopfens in dem Zylinder - bei verschlossenem Zulaufstutzen - wird eine bestimmte Salzmenge in Richtung auf das Drehrohr gefördert und einem an die Stopf-Fördervorrichtung angeschlossenen Rohr zugeführt, das sich mit seinem offenen Ende bis in die Zufuhröffnung des Drehrohrs erstreckt. Danach wird der Stopfen zurückgefahren. Ein Zurückfallen des geförderten Salzes kann durch geeignete Vorrichtungen im Rohr, beispielsweise durch einen sich in Fließrichtung des Mineralsalzes bzw. -salzgemisches verengenden Konus, verhindert werden. Wenn der Stopfen wieder in die Ausgangsstellung gelangt ist, wird der Zulaufstutzen für den Zulauf weiteren Salzes freigegeben, das dann durch den Stopfen nach Schließen des Zulaufstutzens in Richtung auf das Drehrohr hin befördert wird. Der Vorteil dieser Stopf-Fördervorrichtung ist darin zu sehen, daß in Richtung auf das Drehrohr hin gefördertes Salz nicht den Zulauf verstopft, wenn die Förderung aus irgendwelchen Gründen unterbrochen werden muß und das Mineralsalz bzw. - salzgemisch bei längerem Stehen, beispielsweise über Nacht, in der Fördervorrichtung Feuchtigkeit aufnimmt und zusammenbackt. Die erfindungsgemäß bevorzugte Stopf-Fördervorrichtung ermöglicht auch nach längerem Stehen ein störungsfreies Anfahren der Förderung des Mineralsalzes bzw. -salzgemisches in das Drehrohr.

In einer besonderen Ausführungsform des Verfahren können die aus der Vakuumverdampfung stammenden Mineralsalze oder -salzgemische mit weiteren Salzen ähnlicher Konsistenz vereinigt werden, die als sog. "Altsalze" aus dem Betrieb bezeichnet werden. Diese fallen mit einem Wassergehalt von maximal 40 % an und weisen grobe organische Verunreinigungen wie Reste von Dung oder Urin, Blut, Fleisch, Haut o. ä. nicht auf. Solche Salze können beispielsweise einem separaten Vorlaufbehälter zugeführt, dort mit den aus der Vakuumverdampfung stammenden Salzen vermischt und dann der thermischen Behandlung zugeführt werden oder getrennt von den Mineralsalzen oder -salzgemischen der thermischen Behandlung unmittelbar zugeführt werden.

Zwar kann die thermische Behandlung der Mineralsalze bzw. -salzgemische erfindungsgemäß auf beliebige, an sich aus dem Stand der Technik dem Fachmann bekannte Art durchgeführt werden, solange die Aufgabenstellung der Erfindung, Mineralsalze in hoher Reinheit und frei von Keimen herzustellen, erreicht wird. Einer bevorzugten Verfahrensweise entspricht es jedoch, die thermische Behandlung der partiell getrockneten Salze in einem Drehrohrofen durchzuführen. Der Aufbau und die Funktionsweise eines solchen Drehrohrofens sowie Verfahren zum Betreiben eines solchen Ofens können dem Fachmann aus dem Stand der Technik bekannt sein. Mit Vorteil und daher bevorzugt wird ein Drehrohrofen mit einem Durchmesser von 450 mm und darüber und einer Länge von 1500 mm und darüber verwendet.

Die Umlaufgeschwindigkeit eines solchen Ofens ist bevorzugt variabel und kann der jeweiligen Prozeßsituation angepaßt werden, beispielsweise dem Wassergehalt der zugeführten Mineralsalze oder der Geschwindigkeit, in der die Mineralsalze zugeführt werden und folglich auch aus dem Ofen abgezogen werden müssen. Bevorzugt bewegt sich die Umlaufgeschwindigkeit im Bereich von 5 bis 20 U/min. Eine weitere bevorzugte Ausführungsform des Verfahrens besteht darin, die Mineralsalze oder -salzgemische der vorangehenen Vakuumtrocknungsstufe einem Drehrohrofen zuzuführen, der in Laufrichtung des Salzes in einem Winkel (alpha) von 2 bis 10 °, bevorzugt von 3 bis 5 °, abwärts geneigt ist. Damit wird ein hinsichtlich der Geschwindigkeit ebenfalls an die jeweiligen Prozeßbedingungen anpaßbarer Lauf des behandelten Salzes zum Ausgang des Drehrohrofens ermöglicht, ohne daß hierfür aufwendige Vorrichtungen im Innern des Ofens vorzusehen sind.

Weiter ist es erfindungsgemäß bevorzugt, den Drehrohrofen zur Erzeugung erhöhter Temperaturen mit heißen Gasen zu beschicken. Dies können Sauerstofffreie Gase sein, die mit geeigneten technischen Vorrichtungen, beispielsweise Heizwendeln oder Wärmetauschern, auf die für den Prozeß erforderliche Temperatur gebracht werden, und denen Sauerstoff oder Sauerstoff enthaltende Gasgemische zugemischt werden. Bevorzugt wird die Anlage für das erfindungsgemäße Verfahren jedoch mit Verbrennungsgasen und noch mehr bevorzugt mit Verbrennungsgasen aus einem Gasbrenner beschickt, denen Sauerstoff oder Sauerstoff enthaltende Gasgemische, insbesondere Luft, zugemischt werden. Als besonders bevorzugt hat es sich erwiesen, den Drehrohrofen für die thermische Behandlung der partiell getrockneten Mineralsalze und -salzgemische gemäß der Erfindung mit Verbrennungsgasen aus einem Gasbrenner geeigneter Größe und an die Erfordernisse dieser Prozeßstufe anpaßbarer Brennleistung zu beschicken und dem Gasstrom eine Luftmenge zuzumischen, die einem Überschuß von 100 bis 300 %, bevorzugt von 200 %, bezogen auf die zur vollständigen Verbrennung aller verbliebenen organischen Bestandteile der Mineralsalze erforderliche Sauerstoffmenge, entspricht. Die erforderliche Menge läßt sich vom Fachmann in Anpassung an die jeweilige Prozeßsituation leicht durch Messung der Sauerstoffkonzentration in den Abgasen ermitteln. Dadurch wird erreicht, daß in jedem Fall unter den Prozeßbedingungen alle noch in dem Mineralsalz bzw. in der Mineralsalzmischung enthaltenen organischen Komponenten, insbesondere Mikroorganismen wie Bakterien und Sporen, rückstandslos eliminiert und zu Gasen verbrannt werden, die nicht umweltschädlich sind. Ruß oder toxische Gase einer unvollständigen Verbrennung treten folglich nicht auf.

Erfindungsgemäß wird die thermische Behandlung der Mineralsalze oder -salzgemische bei erhöhter Temperatur durchgeführt. Bevorzugt liegt die Temperatur im Bereich von 140 bis 500 °C, noch mehr bevorzugt bei 300 bis 400 °C. Diese Temperatur wird an der heißesten Stelle des Ofens, regelmäßig an der Spitze der Flamme des Gasbrenners, erreicht und auch dort gemessen. Durch eine Behandlungstemperatur in diesen bevorzugten Bereichen läßt sich sicherstellen, daß alle noch im Salz bzw. in der Salzmischung verbliebenen organischen Komponenten vollständig verbrannt werden und die Salze danach keine Mikroorganismen mehr enthalten, die bei der späteren Wiederverwendung des Salzes zu Schädigungen der Rohhäute führen könnten. Darin ist das erfindungsgemäße Verfahren den Verfahren des Standes der Technik deutlich überlegen. Darüberhinaus ist das erhaltene Salz geruchlos und farblich einwandfrei, also weiß.

Wie oben schon angemerkt, können die heißen Abgase dieser Verfahrensstufe dazu verwendet werden, nicht nur die Mineralsalze bzw. -salzmischungen vorzuwärmen, die der Anlage zur thermischen Behandlung bzw. dem Drehrohrofen zugeführt werden. Vielmehr können die heißen Abgase auch zur Vorwärmung der Einsatzstoffe anderer Verfahrensstufen des vorliegenden Verfahrens verwendet werden, beispielsweise zur Vorwärmung der Salzlake oder des Mineralsalzes bzw. -salzgemisches für die Vakuumverdampfung. Selbstverständlich ist auch eine prozeßexterne Nutzung der Abwärme möglich. Dadurch erhöht sich - insbesondere bei hohem Niveau der Energiekosten - die Wirtschaftlichkeit des Verfahrens der Erfindung noch weiter.

In einer weiteren bevorzugten Auführungsform des Verfahrens wird das Mineralsalz bzw. die -salzmischung am Ende der thermischen Behandlung oder danach auf die von den Verwendern gewünschte Korngröße zermahlen. Die Korngröße kann in einer bevorzugten Ausführungsform des Verfahrens bei < 0,1 mm bis 0,6 mm liegen, besonders bevorzugt bei 0,2 mm bis 0,5 mm. Wenn auch die separate Mahlung in einer nachgeschalteten Mühle möglich ist, so wird doch erfindungsgemäß bevorzugt, die Salze in einer vor dem Salzauslauf innerhalb des Drehrohrofens angeordneten Mahlkammer zu mahlen. Diese ist mit Mahlkugeln geeigneter Größe bestückt, die der Fachmann in Anpassung an die Verfahrensbedingungen und an die gewünschte Korngröße auswählen kann. Ein dem Auslauf vorgeschaltetes Sieb kann darüberhinaus verhindern, daß die gewünschte Größe übersteigende Salzkörner oder -brocken den Drehrohrofen verlassen. Das erhaltene Salz ist rieselfähig und kann problemlos bei der Konservierung von Rohhäuten wiederverwendet werden.

Bei der Behandlung der von organischen Bestandteilen weitgehend befreiten Prozeßmischung durch Vakuumverdampfung fällt neben dem Mineralsalz oder einer -salzmischung Wasserdampf an, der entspannt und einem Kondensator zugeleitet wird. Prozeßbedingt läßt sich dabei - zumindest in den weniger bevorzugten Ausführungsformen des Verfahrens - nicht immer vollständig vermeiden, daß geringe Salzmengen mitgerissen werden, die sich dann im Kondensat wiederfinden. Üblicherweise liegen die Salzanteile im Bereich von 0,1 bis 5 g/l des Kondensats, vorzugsweise bei 0,5 bis 2 g/l des Kondensats. Um - im Gegensatz zum Stand der Technik - tatsächlich reines, salzfreies Wasser zu gewinnen, wird in einem nachfolgenden Verfahrensschritt das Kondensat einer Umkehrosmose unterzogen.

Bevorzugt steuert man die Geschwindigkeit, den Druck und die Temperatur der Vakuumverdampfung in der Weise, daß das Kondensat kontinuierlich der Umkehrosmose unterworfen werden kann. Alternativ dazu ist es jedoch auch möglich, das Kondensat des Vakuumverdampfungs- und nachgelagerten Kondensationsschrittes zuerst einem Vorlaufbehälter zuzuführen und dann in die Umkehrosmose einzuspeisen. Eine dritte, bevorzugte Möglichkeit ist darin zu sehen, die beiden vorgenannten Wege vorzusehen und den Vorlaufbehälter nur dann zwischenzuschalten, wenn bei erhöhtem Anfall von Kondensat die sofortige Zufuhr zur Umkehrosmose aus Kapazitätsgründen nicht möglich ist. Ein weiterer Vorteil der dritten Möglichkeit besteht darin, daß die Anlage zur Umkehrosmose auch kurzzeitig, beispielsweise für Reinigungsarbeiten oder den Austausch der Membran, abgeschaltet werden kann, ohne daß dazu das gesamte Verfahren unterbrochen werden muß.

Die Umkehrosmose wird unter an sich bekannten Verfahrensbedingungen durchgeführt. Beispielsweise wird membranseitig ein Druck von 1 bis 30 bar, bevorzugt von 5 bis 20 bar, aufgebracht. In der Folge kann dann der Kondensatdurchsatz bei 50 bis 5000 l/h, bevorzugt bei 100 bis 1000 l/h, liegen, wobei in allen Fällen gleich gute Ergebnisse erzielt werden, als Permeat der Umkehrosmose also reines Wasser gewonnen wird. Die Temperaturen liegen wie üblich im Bereich von 0 bis 30 °C, bevorzugt im Bereich von 5 bis 20 °C. Es können die üblichen semipermeablen Membranen aus Polymeren wie beispielsweise Verbundmaterialien aus Polyamiden und Polysulfonen oder Celluloseacetat, bevorzugt Polyamid/Polysulfon-Verbundmaterialien, mit Porenweiten im Bereich von 0,5 bis 1 nm, bevorzugt von 0,5 bis 0,8 nm, verwendet werden.

Der bei der Umkehrosmose anfallende Rückstand wird nicht verworfen, da er noch Salze und damit Wertstoffe enthält. Der Rückstand wird daher in einer bevorzugten Ausführungsform des Verfahrens bei erhöhter Temperatur thermisch behandelt. Dies kann in einem separaten Verfahrensschritt erfolgen, der hinsichtlich der Bedingungen speziell angepaßt ist. Besonders bevorzugt ist es jedoch, daß man den Rückstand der Umkehrosmose zur thermischen Behandlung mit den partiell getrockneten Salzen aus der Vakuumverdampfung vereinigt und beide Komponenten gemeinsam thermisch, insbesondere in einem Drehrohrofen, behandelt. Dazu wird der Rückstand aus der Umkehrosmose entweder unmittelbar mit den genannten Salzen vereinigt oder zusammen mit diesen einem Vorlaufbehälter zugeführt, von dem aus die Anlage zur thermischen Behandlung beschickt werden kann. Eine weitere bevorzugte Ausführungsform besteht darin, den Rückstand aus der Umkehrosmose einer erneuten Vakuumverdampfung zuzuführen. Dazu wird er mit den aus der Flotation kommenden, von organischen Bestandteilen weitgehend befreiten Prozeßmischungen vereinigt und in die Anlage zur Vakuumverdampfung eingespeist.

Im Resultat wird als Permeat der Umkehrosmose reines Wasser erhalten, in dem Salze nicht mehr nachweisbar sind. Das Wasser kann entweder als Prozeßwasser wiederverwendet werden oder in den Trinkwasserkreislauf eingespeist werden. Allein von Salz vollständig freies Wasser konnte nach dem Stand der Technik aus den in Rede stehenden Salzlaken nicht gewonnen werden.

Das Verfahren der vorliegenden Erfindung kann - wie voranstehend schon mehrmals erläutert - entweder kontinuierlich oder diskontinuierlich durchgeführt werden. Bevorzugt ist die kontinuierliche Verfahrensweise.

Die Vorrichtung der Erfindung wird nachfolgend unter Bezugnahme auf die beigefügten Zeichnungen näher erläutert. Es zeigen:

Figur 1 ein Fließschema des erfindungsgemäßen Verfahrens und gleichzeitig ein Schema der Anordnung der Anlagen, durch die die erfindungsgemäße Vorrichtung zur Behandlung von Salzlaken, oder verunreinigten Mineralsalzen bzw. -salzgemischen gekennzeichnet ist;

Figur 2 einen Längsschnitt durch den Drehrohrofen 53 als bevorzugte Ausführungsform der Anlage 5 zur thermischen Behandlung der partiell getrockneten Salze;

Figur 3 einen Querschnitt durch den Drehrohrofen 53 an der in Figur 2 mit "3" gekennzeichneten Stelle;

Figur 4 eine Aufsicht auf den Deckel 54 des Drehrohrofens 53;

Figur 5 einen Querschnitt durch die erfindungsgemäß bevorzugte Vakuumverdampfungsanlage 4, und

Figur 6 einen Querschnitt durch die Stopf-Fördervorrichtung die bevorzugt für die Beschickung des Drehrohrofens 53 eingesetzt wird.

Die erfindungsgemäße Vorrichtung zur Behandlung von Salzlaken oder verunreinigten Mineralsalzen oder -salzgemischen umfaßt eine Anlage 1 zur Abtrennung der organischen Bestandteile aus der Prozeßmischung. Diese Anlage ist bevorzugt eine Flotationsanlage. Sie kann jedoch auch aus einem Filter, einem Dekanter oder einer Zentrifuge bestehen. Ein Vorteil der Flotationsanlage besteht darin, daß in dieser in einfacher, effizienter Weise ohne großen apparativen Aufwand eine Abtrennung der organischen Komponenten aus der Prozeßmischung weitgehend erreicht werden kann. Auch eine Zentrifuge eignet sich für die effiziente Abtrennung der organischen Komponenten.

In einer bevorzugten Ausführungsform ist der Anlage 1 zur Abtrennung der organischen Komponenten eine Anlage 2 zum Trocknen und Pulverisieren der abgetrennten organischen Bestandteile nachgeschaltet. Die beiden Anlagen 1 und 2 verbindet ein Transportmittel 12, das beispielsweise ein Transportband, eine Leitung o. ä. sein kann. Die Produkte der Trocknung und Pulverisierung aus Anlage 2 werden entweder unmittelbar abgezogen und - verpackt oder als Bulk-Produkte - verkauft oder über eine Abzugsleitung o. ä. 21 einem Vorratsbehälter 3 zugeführt.

Der Anlage 1 zur Abtrennung organischer Bestandteile über eine Leitung 13 nachgeschaltet ist eine Vakuumverdampfungsanlage 4 zur partiellen Trocknung der Mineralsalze oder -salzgemische. Diese kann bevorzugt ein übliches druckstabiles Gefäß, beispielsweise ein Autoklav sein, das die für die vorliegenden Zwecke erforderlichen Einrichtungen zum Bewegen, beispielsweise Rühren des Inhalts, Einrichtungen zur Zufuhr und zum Abzug der beteiligten Komponenten, Einrichtungen zum Aufbringen von Druck usw. aufweist. Der Vakuumverdampfungsanlage 4 über eine Leitung 71 nachgeschaltet kann ein Kondensator 7 sein, in dem die entspannten Wasserdämpfe aus der Anlage 4 kondensiert werden. Als Kondensator 7 können die aus dem Stand der Technik bekannten Kondensatoren und Kühler verwendet werden.

In einer bevorzugten Ausführungsform der erfindungsgemäßen Vorrichtung besteht die Vakuumverdampfungsanlage aus einem dem Druck dieses Verfahrensschrittes standhaltenden, sofern erwünscht (und dann bevorzugt) thermostatisierbaren Druckgefäß, das die Form eines Zylinders mit einem unten angesetzten seitlich ablaufenden Konus oder auch die Form eines sich nach unten verjüngenden Kegels haben kann. Die Zufuhr der wäßrigen Lösung oder Mischung erfolgt über geeignete Zufuhrwege, bevorzugterweise Düsen, besonders bevorzugt über eine Ringdüse, die über geeignete Zufuhrleitungen von außerhalb des Gefäßes gespeist wird. Außerhalb des Gefäßes operierende Heizquellen, bevorzugt eine im Thermostatmantel strömende Heizflüssigkeit oder ein Heizgas, ermöglichen eine Beheizung des Gefäßes auf die Verfahrenstemperatur. Das Vakuum wird durch übliche Vakuumpumpen erzeugt, die mit dem Druckgefäß über ein am oberen Ende des Gefäßes abgehendes Rohr verbunden sind.

In einer bevorzugten Ausführungsform mündet das untere Ende des Konus oder Kegels des Gefäßes in eine Schleuse für den Salzabzug, die mit einem Vorratsgefäß für die Lagerung des Salzes oder mit einem Transportmittel verbunden ist, mit dem das Salz weitertransportiert werden kann. Der besondere Vorteil einer Schleuse für den Salzabzug ist darin zu sehen, daß ein kontinuierlicher Betrieb der Vakuumverdampfungsanlage unter gleichbleibendem Vakuum möglich ist und trotzdem ein permanenter Salzabzug erfolgen kann.

In einer besonders bevorzugten Ausführungsform der Vorrichtung gemäß der Erfindung endet die Leitung, mit der die wäßrige Lösung oder Mischung dem Gefäß zugeführt wird, innerhalb des Gefäßes in einer Ringdüse, die eine beliebige Anzahl, z. B. bevorzugt 6 bis 8 Einzeldüsen zum Versprühen der Lösung bzw. Mischung innerhalb des Gefäßes aufweist. Dadurch wird eine gleichmäßige Verteilung der wäßrigen Phase im Innern und ein kontinuierlicher Verdampfungsvorgang gefördert, der nicht nur zu einem kontinuierlichen Dampfstrom bei gleichbleibenden Vakuumverhältnissen, sondern auch zu einer Bildung regelmäßiger Salzkristalle führt.

Am oberen Ende des Druckgefäßes ist ein Rohr angeschlagen, das die Verbindung mit der Vakuumpumpe bzw. den Vakuumpumpen herstellt und darüberhinaus zum Abzug des bei der Vakuumverdampfung sich bildenden Wasserdampfes dient. Dieses Rohr weist ein mit einem Kühlaggregat verbundenes Kühlsystem auf, bevorzugt ein Intensivkühlsystem, das in einer besonders bevorzugten Ausführungsform der Vorrichtung helixartig im Innern des Rohrs verläuft. Die Temperaturen des Kühlsystems liegen zwischen 8 bis 12 °C an der Eintrittsstelle (am in Fließrichtung des Dampfes unteren Ende des Rohrs) und 14 bis 32 °C an der Austrittsstelle (am in Fließrichtung des Dampfes oberen Ende des Rohrs). Die Kühlung ist also bevorzugt eine Gegenstromkühlung. Durch das Intensivkühlsystem, das zudem in platzsparender Weise innerhalb des Dampfabzugrohrs untergebracht ist, wird eine vollständige und energiesparende Kondensation des Dampfes erreicht.

In einer weiteren erfindungsgemäß bevorzugten Ausführungsform sind in dem Dampfabzugsrohr nach Austritt aus dem Druckgefäß und eine gewisse Wegstrecke danach, vorzugsweise nach einer Rohrkrümmung, eine oder mehrere Dampfsperren angebracht, die beispielsweise in einfachen, in den Dampflauf hineinragenden "Schikanen" bestehen können. In besonders bevorzugter Weise ist die erste Sperre unmittelbar nach Austritt des Dampfabzugsrohrs aus dem Druckgefäß installiert. Möglicherweise vom Dampf mitgerissene Salzkristalle werden hier abgeschieden, fallen in das Druckgefäß zurück und verunreinigen das Kondensat später nicht durch größere Mengen mitgerissenen Salzes. Darüberhinaus bilden derartige Dampfsperren ein Hindernis gegen einen stärkeren Druckabfall; der Verfahrensdruck läßt sich dadurch gleichmäßiger halten.

Die erfindungsgemäße Vorrichtung weist am unteren Ende des Dampfabzugsrohrs ein Reservoir in Form einer weiteren Schleuse auf, in die das Kondensat abgelassen und diskontinuierlich oder kontinuierlich entfernt wird. Vorteilhaft an dieser Ausführungsform ist, daß der Druck in der Vakuumverdampfungsanlage mehr oder weniger konstant gehalten werden kann. Ein Ablassen des Kondensats über die Schleuse vermeidet eine Unterbrechung der Vakuumkondensation infolge Zusammenbrechens des Vakuums, das danach erst wieder durch die Pumpen aufgebaut werden müßte.

Die erfindungsgemäße Vorrichtung umfaßt als wesentlichen Baustein auch eine Anlage 5 zur thermischen Behandlung der partiell getrockneten Salze aus der Vakuumverdampfungsanlage 4. Obwohl dafür auch andere, aus dem Stand der Technik bekannte Anlagen verwendbar sind, ist erfindungsgemäß die Anlage 5 zur thermischen Behandlung der partiell getrockneten Salze bevorzugt ein Drehrohrofen 53. Es hat sich besonders bewährt und ist daher bevorzugt, einen Drehrohrofen mit einem Durchmesser von 450 mm und darüber und einer Länge von 1500 mm und darüber zu verwenden. Beispielsweise hat ein solcher Drehrohrofen einen Durchmesser im Bereich von 450 bis 1200 mm und eine Länge im Bereich von 2000 bis 4000 mm. Andere Maße können jedoch ebenfalls Anwendung finden. Mit Vorteil kann ein solcher Drehrohrofen 53 mit einer Umfangsgeschwindigkeit im Bereich von 5 U/min bis 20 U/min bewegt werden.

In einer bevorzugten Ausführungsform ist der Drehrohrofen 53 so angeordnet, daß er in einem Winkel (alpha) von 2 bis 10 °, bevorzugt von 3 bis 5 °, relativ zur Horizontalen in Laufrichtung des Salzes abwärts geneigt ist. Dadurch kann auf aufwendige Einrichtungen innerhalb des Drehrohrofens 53 verzichtet werden, die einen "Vortrieb" der Salze bewerkstelligen. Vielmehr folgt das Salz der Schwerkraft und wird sukzessive zur Zone höchster Temperatur und durch diese hindurch zum Auslauf transportiert.

In einer weiteren bevorzugten Ausführungsform ist der Drehrohrofen 53 beheizbar. Mit Vorteil wird mit heißen Gasen, besonders bevorzugt mit Verbrennungsgasen beheizt. Die Vorrichtung der Wahl sieht hierfür an geeigneter Stelle des Drehrohrofens 53, beispielsweise im Deckel 54, einen Brenner 541, vorzugsweise einen Gasbrenner vor, dessen Heizleistung den jeweiligen Erfordernissen, beispielsweise der Größe des Ofens, der Durchsatzmenge oder dem Feuchtigkeitsgehalt des zugeführten Mineralsalzes, angepaßt werden kann.

Der Drehrohrofen 53 weist an geeigneter Stelle, beispielsweise im Deckel 54, Öffnungen oder Düsen 542 auf, die den Zutritt von Gasen ermöglichen. Diese sind mit Vorteil von einer Größe, daß sie den Zutritt von Gasen, insbesondere Sauerstoff enthaltenden Gasen, ganz speziell Luft, in einer Menge ermöglichen, die einem Überschuß von 100 bis 300 %, bevorzugt von 200 %, bezogen auf die zur vollständigen Verbrennung aller verbliebenen organischen Bestandteile der Mineralsalze erforderliche Sauerstoffmenge, entspricht. Die erforderliche Menge läßt sich vom Fachmann in Anpassung an die jeweilige Prozeßsituation leicht durch Messung der Sauerstoffkonzentration in den Abgasen ermitteln. Entsprechend wird dann die Größe der Zutrittsöffnungen 542 eingestellt. Dabei ist zu berücksichtigen, daß es in dem Drehrohr 53 nur zu einem leichten Gasstrom kommen darf, der genügend Sauerstoff für die Verbrennung bereitstellt und die im Salz enthaltene Feuchtigkeit und Verbrennungsgase abführt, um nicht leichtere Salzkristalle davonzublasen.

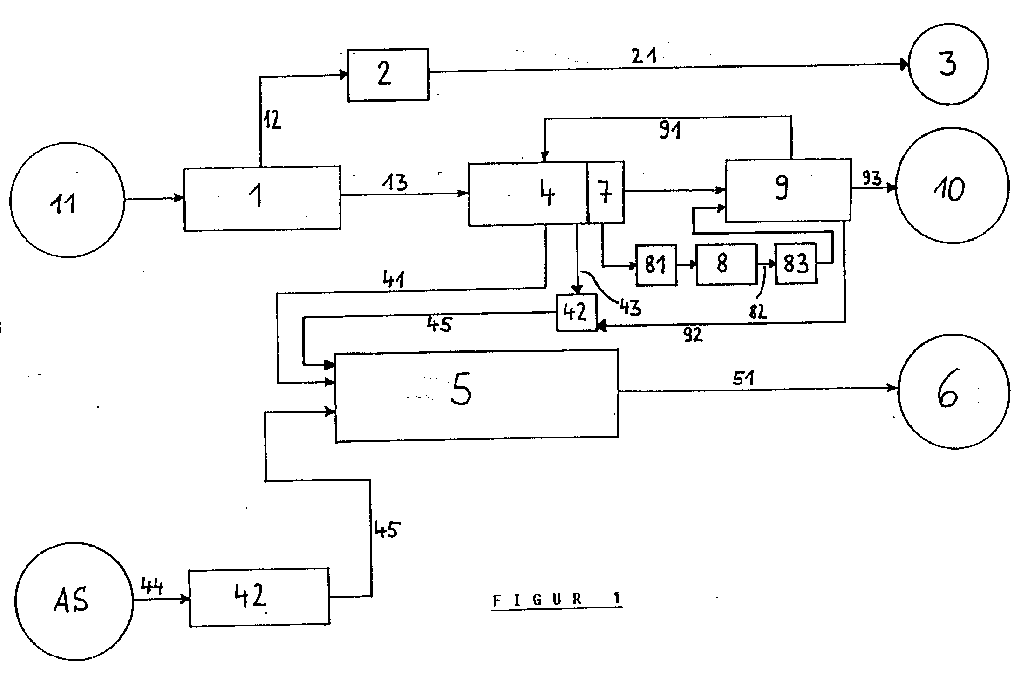

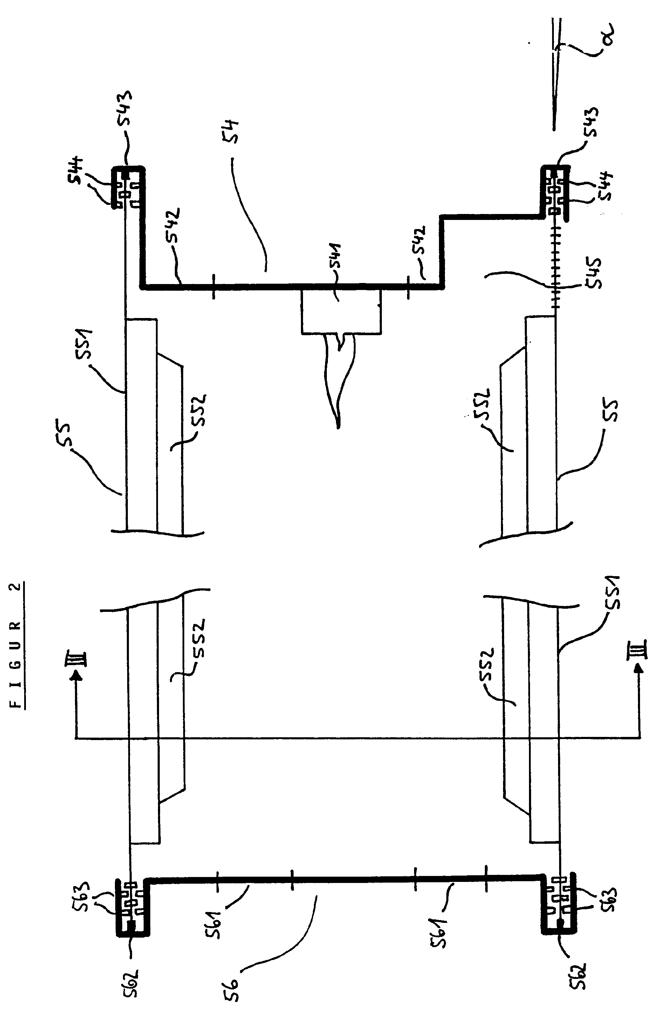

In einer besonders bevorzugten Ausführungsform, die besonders deutlich aus Figur 2 ersichtlich ist, besteht der Drehrohrofen 53 im wesentlichen aus

(a) einem feststehenden Deckel 54 mit einer Brenneranordnung 541, einer Anzahl Gaszutrittsöffnungen oder -düsen 542, einem Lager 543 mit druckstabilen Dichtungen 544 und einer auf der Unterseite des Deckels gelegenen Mahl- und Siebkammer 545;

(b) einem feststehenden Boden 56 mit einer Anzahl Gasaustrittsöffnungen 561 und einem Lager 562 mit druckstabilen Dichtungen 563 und

(c) einem um die Längsachse beweglichen Zylinder 55 mit einer in dem Lager 543 des Deckels 54 und dem Lager 562 des Bodens 56 gelagerten Zylinderwand 551, einer Mehrzahl von parallel zur Längsachse des Zylinders 55 in Längsrichtung verlaufenden, in einem Winkel (β) von im wesentlichen 90 ° zur Zylinderwand angebrachten Mitnehmerschaufeln 552 und einer der Länge der Mahl- und Siebkammer 545 entsprechenden Siebwand 553.

Die oben angesprochenen Dichtungen 544, 563 in den Lagern 543, 562 des Deckels 54 und des Bodens 56 des Drehrohrofens 53 können beliebige, aus dem Stand der Technik für diesen Zweck bekannte Dichtungen sein, solange sie die Lager gegen den Zutritt von Salz schützen. Bevorzugt werden in der erfindungsgemäßen Vorrichtung sog. Labyrinth-Dichtungen verwendet.

Wie oben erwähnt, ist der Drehrohrofen 53 gemäß der Erfindung durch eine Aussparung im Deckel 54 mit einer Mahl- und Siebkammer 545 ausgestattet, in der die getrockneten Kristalle in der Weise gemahlen und ausgesiebt werden, daß das resultierende Mineralsalz hinsichtlich seiner Korngröße den Anforderungen der Verwender entspricht. Dazu enthält die Mahl- und Siebkammer 545 bevorzugt Einrichtungen zum Zermahlen gröberer Kristallle, besonders bevorzugt Mahlkugeln. Der Vorteil von Mahlkugeln ist darin zu sehen, daß sich diese bei der Umlaufbewegung des Drehrohrofens 53 automatisch in der Mahlund Siebkammer 545 bewegen und dadurch die gröberen Kristalle zerkleinern bzw. Zusammenbackungen von Kristallen zerschlagen. Eine separate Mahlung des Mineralsalzes ist daher nicht erforderlich. In entsprechender Weise ist es auch bevorzugt, daß die Öffnungen der Siebwand 553, durch die die zermahlenen Salzkristalle austreten, entsprechend der vom Verwender gewünschten Größe der Salzkristalle variabel sind. Kristalle, deren Größe einen Durchtritt durch die eingestellten Öffnungen nicht erlaubt, werden durch die Mahlkugeln zerkleinert, bis sie die Öffnungen der eingestellten Größe passieren können.

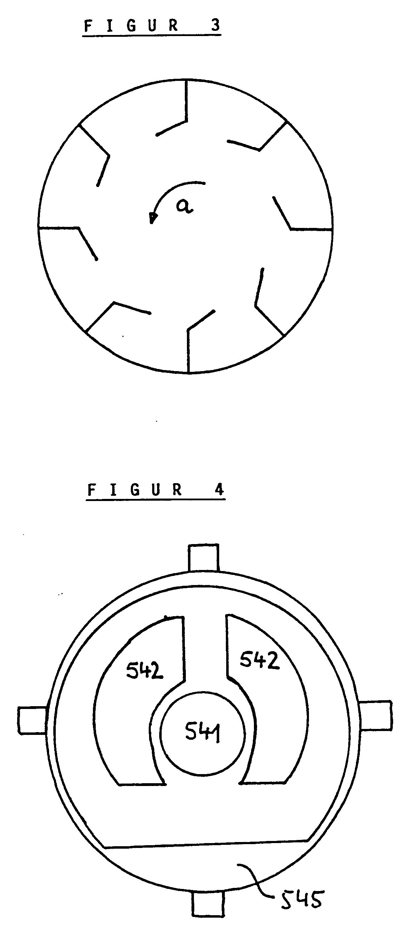

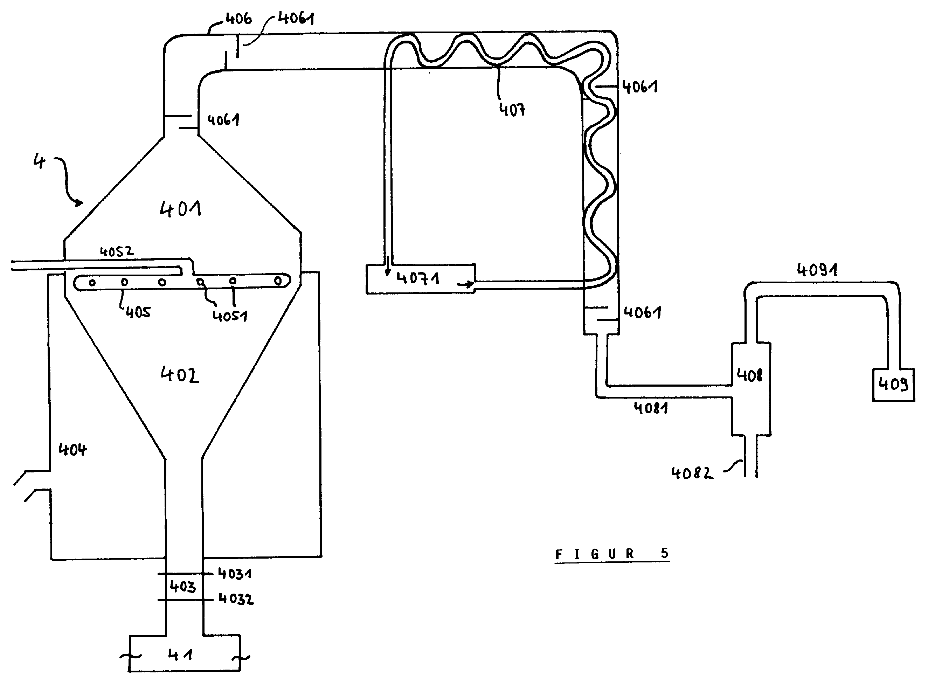

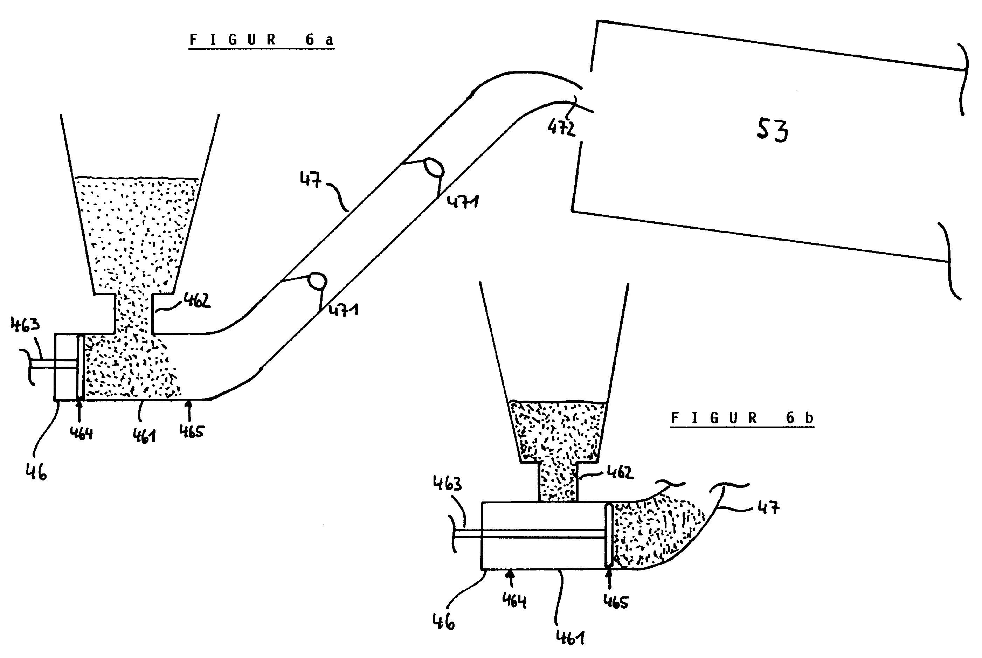

Gemäß einer weiteren besonderen Ausführungsform sind die Mitnehmerschaufeln 552 im Innern des Zylinderkörpers 55 des Drehrohrofens 53 in der Weise ausgebildet, daß sie an ihrem der Zylinderwand 551 entgegengesetzten Ende im Winkel (gamma) von 120 bis 150 °, bevorzugt von 135 °, in Drehrichtung (a) des Zylinders 55 des Drehrohrofens 53 gebogen sind. Dabei ist es nicht zwingend erforderlich, aber bevorzugt, daß die Mitnehmerschaufeln 552 in einem scharfen Knick gebogen sind, wie es aus Figur 3 ersichtlich ist.

Die Anlage 4 zur Vakuumverdampfung und die Anlage 5 zur thermischen Behandlung der partiell getrockneten Mineralsalze oder -salzgemische können entweder unmittelbar über eine Transporteinrichtung 41, beispielsweise eine Leitung, eine Förderschnecke oder ähnliches verbunden sein. In einer bevorzugten Ausführungsform der Erfindung wird das thermisch zu behandelnde Mineralsalz oder -salzgemisch dem Drehrohofen 53 über eine Stopf-Fördervorrichtung 46 zugeführt. Diese kann beispielsweise ein mit seitlichem Zulaufstutzen oder Zulaufbehälter 462 versehener Zylinder 461 sein, in dem ein Stopfer 463 über eine Strecke manuell oder maschinell bewegt werden kann, die sich (in Fließrichtung des zugeführten Salzes) von einem Punkt 464 vor dem seitlichen Zulaufstutzen 462 bis zu einem Punkt 465 hinter dem seitlichen Zulaufstutzen 462 erstreckt. Durch Bewegen des Stopfens 463 in dem Zylinder 461 - bei verschlossenem Zulaufstutzen 462 - läßt sich eine bestimmte Salzmenge in Richtung auf das Drehrohr 53 fördern. Dadurch wird das zu behandelnde Salz einem an die Stopf-Fördervorrichtung 46 angeschlossenen Rohr 47 zugeführt, das sich mit seinem offenen Ende 472 bis in die Zufuhröffnung des Drehrohrs 53 erstreckt. Geeignete Vorrichtungen im Rohr, beispielsweise ein sich in Fließrichtung des Mineralsalzes bzw. -salzgemisches verengender Konus 471, verhindern ein Zurückfallen des Salzes in den Bereich der Bewegung des Stopfens. Der Vorteil dieser Stopf-Fördervorrichtung ist darin zu sehen, daß in Richtung auf das Drehrohr 53 hin gefördertes Salz nicht den Zulauf verstopft, wenn die Förderung aus irgendwelchen Gründen unterbrochen werden muß und das Mineralsalz bzw. -salzgemisch bei längerem Stehen, beispielsweise über Nacht, in der Fördervorrichtung 46 Feuchtigkeit aufnimmt und zusammenbackt.

Die erfindungsgemäß bevorzugte Stopf-Fördervorrichtung ermöglicht auch nach längerem Stehen ein störungsfreies Anfahren der Förderung des Mineralsalzes bzw. -salzgemisches in das Drehrohr 53.

Gemäß einer weiteren bevorzugten Ausführungsform der Erfindung ist es auch möglich, die beiden Anlagen 4 und 5 über eine vergleichbare Transporteinrichtung 43, die über einen Vorlaufbehälter 42 führt, zu verbinden. Dieser ist dann vorteilhaft, wenn der Anlage 5 außer den Salzen aus der Vakuumverdampfungsanlage 4 noch andere Mineralsalzchargen, beispielsweise die sog. "Altsalze" aus dem Betrieb oder die Rückstände aus der Umkehrosmose, zugeführt werden sollen. Letzteres geschieht über Zufuhrleitungen 92 und/oder 44.

Die aus der Anlage 5 zur thermischen Behandlung der Mineralsalze gewonnenen Produkte werden entweder unmittelbar abgezogen und - verpackt oder als Bulk-Produkte - verkauft oder über eine Abzugsleitung o. ä. 51 einem Vorratsbehälter 6 zugeführt.

Die erfindungsgemäße Vorrichtung umfaßt außerdem eine Anlage 9 zur Umkehrosmose des Kondensats aus dem Kondensator 7, die mit dem Kondensator 7 entweder unmittelbar über die Leitung 71 oder über die Leitungen 72 und 82 unter Einschaltung eines Vorlaufbehälters 8 verbunden ist. Gegebenenfalls können vor oder nach dem Vorlaufbehälter 8 alternativ arbeitende, bei Erreichen eines Mindest- oder Höchstflüssigkeitsstandes im Vorlaufbehälter 8 aktivierbare Druckpumpen 81 und 83 geschaltet sein, um die Anlage 9 zur Umkehrosmose mit dem erforderlichen Verfahrensdruck im Bereich von 1 bis 30 bar, bevorzugt von 5 bis 20 bar, zu beaufschlagen.

Als Anlage 9 zur Umkehrosmose können die üblichen, kommerziell erhältlichen Einheiten verwendet oder Anlagen eingesetzt werden, die sich aus einzelnen, für sich erhältlichen und bekannten Teilen wie Gefäß, Membran, Anschlüsse für Zu- und Ableitungen usw. zusammensetzen. Aus Gründen der Servicefreundlichkeit und Zugänglichkeit für Reinigungs- und Reparaturarbeiten sowie der Möglichkeit, eine Anlage auf bestimmte Erfordernisse abzustimmen, werden Anlagen bevorzugt, die sich aus einzelnen, für sich erhältlichen Teilen zusammensetzen.

Das als Permeat aus der Anlage 9 zur Umkehrosmose austretende hochreine Wasser kann entweder unmittelbar abgezogen und in Tanks abgefüllt oder über eine Abzugsleitung o. ä. 93 einem Vorratsbehälter 10 zugeführt werden. Der Rückstand aus der Anlage 9 zur Umkehrosmose wird vorzugsweise nicht verworfen, sondern entweder über die Leitung 91 wieder der Vakuumverdampfungsanlage 4 oder über die Leitung 92 - wie oben erwähnt - dem Vorlaufbehälter 42 und nachfolgend der Anlage 5 zur thermischen Behandlung der partiell getrockneten Salze zugeführt.

Alle Anlagenteile werden bevorzugt aus nicht von den Mineralsalzen und ihren Lösungen korrodierbaren Materialien hergestellt, wobei dem Fachmann dazu eine Vielzahl von Werkstoffen zur Verfügung stehen. Besonders bevorzugt wird nichtrostender Stahl.

Die Erfindung wird nachfolgend durch ein Ausführungsbeispiel näher erläutert, ohne jedoch dadurch die Erfindung auf die Anwendung im Bereich der Aufarbeitung von Kochsalz aus der Konservierung von Rohhäuten zu beschränken.

Beispiel

Kochsalz, das beim Trockenzentrifugieren und Abschaben des Salzes von konservierten Rohhäuten anfiel, war vor Passage des erfindungsgemäßen Verfahrens laut Analyse wie folgt zusammengesetzt:

85 Gew.-% NaCl;
0,4 Gew.-% Naphthalin und
14,6 Gew.-% organische Rückstände und Feuchtigkeit.

Das Salz hatte eine dunkelrotbraune Farbe und einen faulen, dungartigen Geruch.

1000 kg einer derartigen Salzlake wurden nach Zusatz von Kieselgur als Flotationshilfsmittel flotiert und dabei 200 kg eines Flotationsrückstandes gewonnen, die nachfolgend bei 60 °C getrocknet und pulverisiert wurden. Es ergaben sich 120 kg eines trockenen, als Viehfutter verwendbaren Pulvers.

Die etwa 15 % Kochsalz enthaltende Salzlake (800 l) wurde in der Vakuumverdampfungsanlage bei 40 °C und einem Druck von $10^{-1}$ bar behandelt. Das dabei entstehende, partiell getrocknete Kochsalz (40 % Feuchtigkeit) wurde zusammen mit 426 kg stark organisch verunreinigtem Altsalz aus der Häutekonservierung kontinuierlich einem bei 350 °C betriebenen Drehrohrofen zugeführt (Neigung alpha: 2 °; Umfangsgeschwindigkeit: 10 U/min; Durchmesser: 650 mm; Länge: 2500 mm). Die Passage des Kochsalzes durch den Ofen dauerte 60 Minuten. Nach Abkühlen wurden 498 kg eines rieselfähigen weißen, geruchlosen Salzes erhalten das sich analytisch als reines (> 99,5 %) Kochsalz erwies. Die Korngröße betrug 0,3 mm.

Die Dämpfe der Vakuumverdampfung wurden entspannt und kondensiert und das Kondensat auf Raumtemperatur abgekühlt und danach der Umkehrosmose zugeführt. Diese wurde mit einer Membran aus Polyamid-/Polysulfon-Verbundmaterial (Porendurchmesser 0,5 nm) bei einem Druck von 14 bar, einer Temperatur von 25 °C und variablem Durchsatz von 100 bis 1000 l/h betrieben.

Bei einem Salzanteil von 2 g Kochsalz/l betrug die Ausbeute etwa 60 % an reinem Wasser, in dem kein restliches Salz mehr nachgewiesen werden konnte.

Ein weiterer Versuch unter vergleichbaren Bedingungen ergab bei einem Salzanteil von 3 g Kochsalz/l etwa 52 % an reinem Wasser.

Der Rückstand wurde erneut dem Schritt der Vakuumverdampfung zugeführt.

**Patentansprüche**

1. Verfahren zur Behandlung von Salzlaken und verunreinigten Mineralsalzen oder -salzgemischen, wobei man

(a) organische Bestandteile weitgehend aus der Prozeßmischung abtrennt,

(b) die resultierende Mischung einer Vakuumverdampfung unterwirft,

(c) die partiell getrockneten Mineralsalze oder -salzgemische bei erhöhter Temperatur thermisch behandelt und danach reine, trockene Mineralsalze oder -salzgemische gewinnt,

(d) den Dampf des Vakuumverdampfungsschrittes kondensiert und einer Umkehrosmose unterwirft und

(e) als Permeat der Umkehrosmose reines Wasser gewinnt.

2. Verfahren nach Anspruch 1, dadurch gekennzeichnet, daß man die Lake, das Mineralsalz oder -salzgemisch einer Flotation, Dekantierung oder Zentrifugation zur Abtrennung organischer Bestandteile unterwirft und gegebenenfalls zusätzlich die angetrennten organischen Bestandteile trocknet und pulverisiert.

3. Verfahren nach einem der Ansprüche 1 oder 2, dadurch gekennzeichnet, daß man die Vakuumverdampfung bei 20 bis 50 °C, vorzugsweise bei 42 bis 50 °C, und/oder einem Druck von 0,5 bis $10^{-3}$ bar, bevorzugt bei $10^{-1}$ bis $10^{-2}$ bar durchführt.

4. Verfahren nach einem der Ansprüche 1 bis 3, dadurch gekennzeichnet, daß man die thermische Behandlung in einem Drehrohrofen durchführt.

5. Verfahren nach einem der Ansprüche 1 bis 4, dadurch gekennzeichnet, daß man die thermische Behandlung in einem mit einer Umlaufgeschwindigkeit von 5 bis 20 U/min bewegten Drehrohrofen durchführt.

6. Verfahren nach einem der Ansprüche 1 bis 5, dadurch gekennzeichnet, daß man die thermische Behandlung in einem im Winkel (alpha) von 2 bis 10 °, vorzugsweise von 3 bis 5 °, relativ zur Horizontalen in Laufrichtung des Mineralsalzes abwärts geneigten Drehrohrofen durchführt.

7. Verfahren nach einem der Ansprüche 1 bis 6, dadurch gekennzeichnet, daß man dem Drehrohrofen das thermisch zu behandelnde Mineralsalz oder -salzgemisch über eine Stopf-Fördervorrichtung zuführt.

8. Verfahren nach einem der Ansprüche 4 bis 7, dadurch gekennzeichnet, daß man den Drehrohrofen mit heißen Gasen, vorzugsweise heißen Verbrennungsgasen, noch mehr bevorzugt heißen Verbrennungsgasen aus einem Gasbrenner, beschickt.

9. Verfahren nach einem der Ansprüche 4 bis 8, dadurch gekennzeichnet, daß man dem Drehrohrofen einen Luftüberschuß im Gasstrom von 100 bis 300 %, vorzugsweise 200 %, bezogen auf die zur vollständigen Verbrennung der restlichen organischen Komponenten erforderliche Menge, zuführt.

10. Verfahren anch einem der Ansprüche 1 bis 9, dadurch gekennzeichnet, daß man die thermische Behandlung bei einer Temperatur von 140 bis 500 °C, vorzugsweise 300 bis 400 °C durchführt.

11. Verfahren nach einem der Ansprüche 1 bis 10, dadurch gekennzeichnet, daß man den Schritt der Vakuumverdampfung so steuert, daß das Kondensat des Vakuumverdampfungsschrittes kontinuierlich unmittelbar der Umkehrosmose unterworfen werden kann oder zusätzlich über einen Vorlaufbehälter der Umkehrosmose zugeführt wird.

12. Verfahren nach einem der Ansprüche 1 bis 11, dadurch gekennzeichnet, daß man es kontinuierlich durchführt.

13. Vorrichtung zur Behandlung von Salzlaken oder verunreinigten Mineralsalzen oder -salzgemischen, gekennzeichnet durch

(a) eine Anlage (1) zur Abtrennung organischer Bestandteile aus der Prozeßmischung;

(b) eine Vakuumverdampfungsanlage (4) zur partiellen Trocknung der Mineralsalze oder -salzgemische;

(c) eine Anlage (5) zur thermischen Behandlung der partiell getrockneten Mineralsalze oder -salzgemische aus der Vakuumverdampfungsanlage (4);

(d) einen Kondensator (7) zur Kondensation der Feuchtigkeitsdämpfe aus der Vakuumverdampfungsanlage (4) und

(e) eine Anlage (9) zur Umkehrosmose des Kondensats aus Schritt (d), sowie

(f) Transportmittel (12, 71, 93) zum Verbinden der Anlage (1) zur Abtrennung organischer Bestandteile, der Vakuumverdampfungsanlage (4), des Kondensators (7) und der Anlage (9) zur Umkehrosmose in Folge sowie Transportmittel (41) zum Verbinden der Vakuumverdampfungsanlage (4) mit der Anlage (5) zur thermischen Behandlung der Salze.

14. Vorrichtung nach Anspruch 13, dadurch gekennzeichnet, daß die Anlage (1) zur Abtrennung organischer Bestandteile aus der Prozeßmischung eine Flotationsanlage, ein Dekanter oder eine Zentrifuge ist.

15. Vorrichtung nach einem der Ansprüche 13 oder 14, gekennzeichnet zusätzlich durch eine Anlage (2) zum Trocknen und Pulverisieren der abgetrennten organischen Bestandteile.

16. Vorrichtung nach einem der Ansprüche 13 bis 15, dadurch gekennzeichnet, daß die Vakuumverdampfungsanlage (4) zur partiellen Trocknung der Mineralsalze oder -salzgemische ein gegebenenfalls thermostatisierbares Gefäß in Zylinderform (401) mit am unteren Ende angesetztem, sich verjüngendem Konus (402) oder in Form eines umgekehrten sich nach unten verjüngenden Kegels (402) mit einer in einer Ringdüse (405) im Innern des Gefäßes endenden Zufuhrleitung (4052) für die wäßrige, Mineralsalze enthaltende Lösung oder Mischung, einer oder mehreren Schleusen (403) für den Salzabzug am unteren Ende des Gefäßes, einem am oberen Ende des Gefäßes angeschlagenen Abzugsrohr (406) für den Wasserdampf mit einer oder mehreren eingebauten Dampfsperren (4061) und einer bevorzugt im Innern des Rohrs eingebauten Kühlung (407) zum Kondensieren des Dampfes sowie einer oder mehreren Schleusen (408) für den Kondensatabzug sowie einer oder mehreren Vakuumpumpen (409) ist.

17. Vorrichtung nach einem der Ansprüche 13 bis 16, dadurch gekennzeichnet, daß die Anlage (5) zur thermischen Behandlung der partiell getrockneten Salze aus der Vakuumverdampfung ein Drehrohrofen (53) ist.

18. Vorrichtung nach einem der Ansprüche 13 bis 17, dadurch gekennzeichnet, daß die Anlage (5) zum thermischen Behandlung der partiell getrockneten Salze ein mit heißen Gasen beheizbarer, vorzugsweise mit Verbrennungsgasen beheizbarer, noch mehr bevorzugt mit Verbrennungsgasen aus einem Gasbrenner beheizbarer Drehrohrofen (53) ist.

19. Vorrichtung nach einem der Ansprüche 13 bis 18, dadurch gekennzeichnet, daß der Drehrohrofen (53) im wesentlichen besteht aus

(a) einem feststehenden Deckel (54) mit einer Brenneranordnung (541), einer Anzahl Gaszutrittsöffnungen oder -düsen (542), einem Lager (543) mit druckstabilen Dichtungen (544) und einer auf der Unterseite des Deckels gelegenen Mahl- und Siebkammer (545);
(b) einem feststehenden Boden (56) mit einer Anzahl Gasaustrittsöffnungen (561) und einem Lager (562) mit druckstabilen Dichtungen (563);
(c) einem um die Längsachse beweglichen Zylinder (55) mit einer in dem Lager (543) des Deckels (54) und dem Lager (562) des Bodens (56) gelagerten Zylinderwand (551), einer Mehrzahl von parallel zur Längsachse des Zylinders (55) in Längsrichtung verlaufenden, in einem Winkel ($\beta$) von im wesentlichen 90 ° zur Zylinderwand angebrachten Mitnehmerschaufeln (552) und einer der Länge der Mahl- und Siebkammer (545) entsprechenden Siebwand (553).

20. Vorrichtung nach einem der Ansprüche 13 bis 19, gekennzeichnet durch einen zusätzlichen Vorlaufbehälter (42) in der Leitung (43) zwischen der Vakuumverdampfungsanlage (4) und der Anlage (5) zur thermischen Behandlung der partiell getrockneten Salze und/oder eine zusätzliche Zuleitung (44) zur Einleitung von Altsalzen in den zusätzlichen Vorlaufbehälter (42) und/oder eine zusätzliche Zuleitung (92) zwischen der Anlage (9) zur Umkehrosmose und dem zusätzlichen Vorlaufbehälter (42) und/oder einen oder mehrere zusätzliche Vorratsbehälter (3, 6, 10) für die getrockneten und pulverisierten abgetrennten organischen Bestandteile, das gewonnene Reinsalz und/oder das gewonnene Wasser.

## Claims

1. A process for the treatment of brine and contaminated mineral salts and mixtures thereof comprising the steps of
(a) substantially separating organic components from the process mixture,
(b) subjecting the resulting mixture to a vacuum evaporation step,
(c) thermally treating the partially dried mineral salts or their mixtures at an elevated temperature and thereafter obtaining pure dry mineral salts or mixtures thereof,
(d) condensing the vapour resulting from the vacuum evaporation step and subjecting said vapour to a reverse osmosis step, and
(e) obtaining from said reverse osmosis step pure water.

2. Process according to claim 1 wherein the brine, mineral salt and/or mixture thereof is subjected to a step of flotation, decantation or centrifugation in order to separate organic components, and optionally the separated organic components are additionally dried and powdered.

3. Process according to any of the claims 1 or 2 wherein the vacuum evaporation step is carried out at a temperature of from 20 to 50 °C, preferably at a temperature of from 42 to 50 °C, and/or at a pressure of from 0,5 to $10^{-3}$ bar, preferably at a pressure of from $10^{-1}$ to $10^{-2}$ bar.

4. Process according to any of the claims 1 to 3 wherein the thermal treatment is carried out in a rotary tubular kiln.

5. Process according to any of the claims 1 to 4 wherein the thermal treatment is carried out in a rotary tubular kiln rotating at a rotating speed of from 5 to 20 rpm.

6. Process according to any of the claims 1 to 5 wherein the thermal treatment is carried out in a rotary tubular kiln inclined downwards, in the direction of the flow of the mineral salt(s), at an angle (alpha) of from 2 to 10 °, preferably of from 3 to 5 °, relative to the horizontal plane.

7. Process according to any of the claims 1 to 6 wherein the minral salt or the mixture thereof is fed to the rotary tubular kiln by means of a stuffing conveyor means.

8. Process according to any of the claims 4 to 7 wherein the rotary tubular kiln is charged with hot gases,

EP 0 394 607 B1

preferably with hot gases resulting from a combustion, more preferably with hot gases resulting from a combustion in a gas-burner.

9. Process according to any of the claims 4 to 8 wherein the rotary tubular kiln is charged with an excess of air in the gas stream of from 100 to 300 %, preferably of 200 %, based on the amount necessary for the complete combustion of the residual organic components.

10. Process according to any of the claims 1 to 9 wherein the thermal treatment is carried out at a temperature of from 140 to 500 °C, preferably of from 300 to 400 °C.

11. Process according to any of the claims 1 to 10 wherein the step of vacuum evaporation is controlled in such a manner that the condensate resulting from the step of vacuum evaporation can continuously and immediately be subjected to a reverse osmosis step or additionally be led to the step of reverse osmosis via a storage tank.

12. Process according to any of the claims 1 to 11 wherein the process is carried out in a continuous manner.

13. Apparatus for the treatment of brine and contaminated mineral salts and mixtures thereof comprising

(a) a means (1) for separating organic components from the process mixture;

(b) a means (4) for vacuum evaporation in order to partially dry said mineral salts or mixtures thereof;

(c) a means (5) for the thermal treatment of said partially dried mineral salts or mixtures thereof resulting from said means (4) for vacuum evaporation;

(d) a condenser (7) for condensing the humid vapors resulting from said means (4) for vacuum evaporation; and

(e) a means (9) for reverse osmosis treatment of the condensate resulting from step (d); as well as

(f) conveying means (12, 71, 93) connecting in series said means (1) for separating organic components, said means (4) for vacuum evaporation, said condenser (7) and said means (9) for reverse osmosis treatment, and conveying means (41) connecting said means (4) for vacuum evaporation and said means (5) for the thermal treatment of said salts.

14. Apparatus according to claim 13 wherein said means (1) for separating organic components from the process mixture is a flotation means, a decanter or a centrifuge.

15. Apparatus according to any of the claims 13 or 15 comprising in addition a means (2) for drying and powdering said separated organic conponents.

16. Apparatus according to any of the claims 13 to 15 wherein said means (4) for vaccum evaporation for partially drying said mineral salts or mixtures thereof comprises a vessel (401) in the shape of a cylinder having attached at its lower end a tapered cone (402) or in the shape of a reversed tapered cone (402), the temperature of which vessel (401) optinally being controlled by a thermostat, said vessel (401) comprising a feeding line (4052) leading to an annular nozzle (405) for spraying said aqueous solution containing said mineral salts or mixtures thereof within said vessel (401); one or more lock chambers (403) at the bottom of said vessel (401) for removing said partially dried mineral salts or mixtures thereof; a tube (406) for removing the water vapour from the top of said vessel (401) comprising one or more vapour traps (4061) and a cooling device (407) for condensing the water vapour said cooling device (407) preferably being fitted into said tube (406); one or more lock chambers (408) for removing the condensed liquid; and one or more vacuum pumps (409).

17. Apparatus according to any of the claims 13 to 16 wherein said means (5) for the thermal treatment of said partially dried salts resulting from the step of vacuum evaporation is a rotary tubular kiln (53).

18. Apparatus according to any of the claims 13 to 17 wherein said means (5) for the thermal treatment of said partially dried salts is a rotary tubular kiln (53) which is heated by means of hot gases, preferably by hot gases resulting from a combustion, more preferably with hot gases resulting from a combustion in a gas-burner.

19. Apparatus according to any of the claims 13 to 18 wherein the rotary tubular kiln (53) substantially comprises

(a) a stationary lid (54) comprising a burner device (541), a number of openings or nozzles (542) for the supply of gas, a bearing (543) including pressure-stabilized gaskets (544) and a chamber (545) for grinding and sieving said salts, said chamber being positioned at the bottom side of said lid (54);

(b) a stationary bottom (56) having a number of openings (561) for the withdrawal of gas and comprising a bearing (562) including pressure-stabilized gaskets (563);

(c) a cylinder (55) being rotatable around a longitudinal axis, the sides (551) of said cylinder (55) being supported by said bearing (543) of said lid (54) and said bearing (562) of said bottom (56), a multitude of driver blades (552) being positioned in longitudinal direction parallel to said longitudinal axis of said cylinder (55) and fixed at an angle of substantially 90 ° relative to the sides (551) of said cylinder (55), and a sieve grate (553) corresponding in length to the length of said chamber (545) for grinding and sieving said salts.

20. Apparatus according to any of the claims 13 to 19, additionally comprising a storage tank (42) in the line (43) between said means (4) for vacuum evaporation and said means (5) for the thermal treatment of said

14

partially dried salts and/or a supply line (44) for supplying waste salts into said additional storage tank (42) and/or a supply line (92) between the means (9) for reverse osmosis and said additional storage tank (42) and/or one or more storage tanks (3, 6, 10) for said separated, dried and powdered organic components, said pure salts and/or said pure water.

## Revendications

1. Procédé pour le traitement de saumures et de sels minéraux ou de mélanges de sels minéraux pollués, consistant

(a) à séparer dans une large mesure les constituants organiques du mélange de processus,

(b) à soumettre le mélange résultant à une évaporation au vide,

(c) à soumettre les sels minéraux ou mélanges de sels minéraux partiellement séchés à un traitement thermique à une température accrue et à obtenir ensuite des sels minéraux ou mélanges de sels minéraux secs purs,

(d) à condenser la vapeur de l'opération d'évaporation au vide et à la soumettre à une osmose inverse, et

(e) à obtenir comme perméat de l'osmose inverse de l'eau pure.

2. Procédé selon la revendication 1, caractérisé en ce que la saumure, le sel minéral ou le mélange de sels minéraux sont soumis à une flottation, une décantation ou une centrifugation pour séparer des constituants organiques et que, le cas échéant, les constituants organiques séparés sont, en plus, séchés et pulvérisés.

3. Procédé selon l'une des revendications 1 ou 2, caractérisé en ce que l'évaporation au vide est effectuée à une température de 20 à 50°C, de préférence de 42 à 50°C, et/ou à une pression de 0,5 à $10^{-3}$ bar, de préférence à une pression de $10^{-1}$ à $10^{-2}$ bar.

4. Procédé selon l'une des revendications 1 à 3, caractérisé en ce que le traitement thermique est effectué dans un four tubulaire tournant.

5. Procédé selon l'une des revendications 1 à 4, caractérisé en ce que le traitement thermique est effectué dans un four tubulaire tournant à une vitesse de rotation de 5 à 20 tours/min.

6. Procédé selon l'une des revendications 1 à 5, caractérisé en ce que le traitement thermique est effectué dans un four tubulaire tournant incliné vers le bas sous un angle (alpha) de 2 à 10°, de préférence de 3 à 5°, par rapport à l'horizontale dans la direction de déplacement du sel minéral.

7. Procédé selon l'une des revendications 1 à 6, caractérisé en ce que le sel minéral ou le mélange de sels minéraux devant être soumis au traitement thermique est amené au four tubulaire tournant par l'intermédiaire d'un dispositif de transport et de bourrage.

8. Procédé selon l'une des revendications 4 à 7, caractérisé en ce que le four tubulaire tournant est alimenté en gaz chauds, de préférence en gaz de combustion chauds et encore plus avantageusement en gaz de combustion chauds provenant d'un brûleur.

9. Procédé selon l'une des revendications 4 à 8, caractérisé en ce que le four tubulaire tournant est alimenté avec un excédent d'air dans le courant de gaz de 100 à 300 %; de préférence de 200 %, rapporté à la quantité nécessaire pour la combustion complète des constituants organiques résiduels.

10. Procédé selon l'une des revendications 1 à 9, caractérisé en ce que le traitement thermique est effectué à une température comprise entre 140 et 500°C, de préférence entre 300 et 400°C.

11. Procédé selon l'une des revendications 1 à 10, caractérisé en ce que l'étape de l'évaporation au vide est commandée de telle façon que le condensat de l'étape d'évaporation au vide peut être soumis directement et en continu à l'osmose inverse ou amené, en supplément, à l'osmose inverse par l'intermédiaire d'un décanteur primaire.

12. Procédé selon l'une des revendications 1 à 11, caractérisé en ce qu'il est conduit en continu.

13. Dispositif pour le traitement de saumures ou de sels minéraux ou mélanges de sels minéraux pollués, caractérisé en ce qu'il comprend

(a) une installation (1) pour la séparation des constituants organiques du mélange de processus,

(b) une installation d'évaporation au vide (4) pour le séchage partiel des sels minéraux ou mélanges de sels minéraux,

(c) une installation (5) pour le traitement thermique des sels minéraux ou mélanges de sels minéraux provenant de l'installation d'évaporation au vide (4),

(d) un condenseur (7) pour la condensation des vapeurs d'humidité provenant de l'installation d'évaporation au vide (4), et

(e) une installation (9) pour l'osmose inverse du condensat provenant de l'étape (d) ainsi que

(f) des moyens de transport (12, 71, 93) pour relier l'installation (1) pour la séparation des constituants organiques, l'installation d'évaporation au vide (4), le condenseur (7) et l'installation (9) pour l'osmose inverse en succession, ainsi que des moyens de transport (41) pour relier l'installation d'évaporation au vide (4) à l'installation (5) pour le traitement thermique des sels.

14. Dispositif selon la revendication 13, caractérisé en ce que l'installation (1) pour la séparation des constituants organiques contenus dans le mélange de processus est une installation de flottation, un appareil à décanter ou une centrifugeuse.

15. Dispositif selon l'une des revendications 13 ou 14, caractérisé en ce qu'il comprend, en plus, une installation (2) pour le séchage et la pulvérisation des constituants organiques séparés.

16. Dispositif selon l'une des revendications 13 à 15, caractérisé en ce que l'installation d'évaporation au vide (4) pour le séchage partiel des sels minéraux ou mélanges de sels minéraux est constituée par un récipient de forme cylindrique (401), éventuellement à thermostat, qui comporte à l'extrémité inférieure un cône (402) qui se rétrécit ou, sous la forme d'un cône renversé (402) qui se rétrécit vers le bas, une conduite d'amenée (4052) pour la solution aqueuse ou le mélange contenant les sels minéraux qui se termine dans une buse annulaire (405) à l'intérieur du récipient, un ou plusieurs sas (403) pour le soutirage des sels à l'extrémité inférieure du récipient, un tuyau d'évacuation (406) pour la vapeur d'eau monté sur l'extrémité supérieure du récipient et muni d'un ou de plusieurs pièges à vapeur (4061) intégrés, et d'un système de refroidissement (407) pour la condensation de la vapeur intégré de préférence à l'intérieur du tuyau ainsi que d'un ou de plusieurs sas (408) pour le soutirage du condensat ainsi que d'une ou de plusieurs pompes à vide (409).

17. Dispositif selon l'une des revendications 13 à 16, caractérisé en ce que l'installation (5) pour le traitement thermique des sels partiellement séchés provenant de l'évaporation au vide est un four tubulaire tournant (53).

18. Dispositif selon l'une des revendications 13 à 17, caractérisé en ce que l'installation (5) pour le traitement thermique des sels partiellement séchés est un four tubulaire tournant (53) pouvant être chauffé avec des gaz chauds, de préférence avec des gaz de combustion et plus encore avec des gaz de combustion d'un brûleur.

19. Dispositif selon l'une des revendications 13 à 18, caractérisée en ce que le four tubulaire tournant (53) se compose essentiellement

(a) d'un couvercle fixe (54) avec un système de brûleur (541), une pluralité d'orifices ou de buses d'entrée de gaz (542), un palier (543) avec des joints d'étanchéité (544) résistant à la pression et une chambre de broyage et de tamisage (545) située sur la face inférieure du couvercle;

(b) d'un fond fixe (56) avec une pluralité d'orifices de sortie de gaz (561) et un palier (562) avec des joints d'étanchéité (563) résistant à la pression;

(c) d'un cylindre (55) mobile autour de l'axe longitudinal, avec une paroi de cylindre (551) montée dans le palier (543) du couvercle (54) et dans le palier (562) du fond (56), une pluralité de palettes d'entraînement (552) qui s'étendent parallèlement à l'axe longitudinal du cylindre (55), dans le sens longitudinal, et sont disposées sous un angle (β) de sensiblement 90° par rapport à la paroi de cylindre, et une paroi de tamis (553) correspondant à la longueur de la chambre de broyage et de tamisage (545).

20. Dispositif selon l'une des revendications 13 à 19, caractérisé en ce qu'il comprend un décanteur primaire supplémentaire (42) dans la conduite (43) entre l'installation d'évaporation au vide (4) et l'installation (5) pour le traitement thermique des sels partiellement séchés et/ou une conduite d'amenée supplémentaire (44) pour l'introduction des sels de récupération dans le décanteur primaire supplémentaire (42) et/ou une conduite d'amenée supplémentaire (92) entre l'installation (9) pour l'osmose inverse et le décanteur primaire supplémentaire (42) et/ou un ou plusieurs réservoirs de stockage supplémentaires (3, 6, 10) pour les constituants organiques séchés et pulvérisés, le sel pur obtenu et/ou l'eau obtenue.

F I G U R 1

EP 0 394 607 B1

FIGUR 2

EP 0 394 607 B1

FIGUR 3

FIGUR 4

EP 0 394 607 B1

F I G U R   5

FIGUR 6 a

FIGUR 6 b